# EUROPÄISCHE PATENTSCHRIFT

(11) **EP 1 283 129 B1**
(45) Veröffentlichungstag und Bekanntmachung des Hinweises auf die Patenterteilung: **03.11.2004**
(21) Anmeldenummer: 02015810.1
(22) Anmeldetag: 16.07.2002
(51) Int. Cl.: B60R 3/02, B60R 3/00

(54) **Klapptreppe für Wohnwagen oder Wohnmobile**
Folding stairway for caravan or camper
Marchepied escamotable pour camping-car ou caravan

(30) Priorität: 09.08.2001 DE 20113258 U
(43) Veröffentlichungstag der Anmeldung: 12.02.2003
(73) Patentinhaber: Altgilbers, Änne, 48488 Emsbüren (DE)
(72) Erfinder: Altgilbers, Änne, 48488 Emsbüren (DE)
(74) Vertreter: Schulze Horn, Kathrin

(56) Entgegenhaltungen:
- US-A- 3 407 901
- US-A- 3 493 077
- US-A- 4 720 116

## Beschreibung

Die vorliegende Erfindung betrifft eine Klapptreppe für Wohnwagen oder Wohnmobile, die unterhalb einer Türöffnung des Wohnwagens oder Wohnmobils lösbar eingehängt werden kann, die mehrere in Gebrauchsstellung horizontale, über Verbindungselemente gelenkig miteinander verbundene Trittstufen umfaßt, wobei die Verbindungselemente durch zwei Paare von parallelen Seitenholmen gebildet sind, wobei jedes Seitenholmpaar mit den Stufen eine gelenkige Parallelogrammanordnung zur Anpassung an unterschiedliche Höhendifferenzen zwischen Wohnwagen oder Wohnmobil und einem Untergrund, auf dem der Wohnwagen oder das Wohnmobil steht, bildet, und wobei die Klapptreppe zwischen ihrer ausgeklappten Gebrauchsstellung und einer eingeklappten, platzsparenden Transportstellung verstellbar ist, wobei die Parallelogrammanordnung durch wenigstens eine Verriegelungseinrichtung in vorgebbaren Stellungen festlegbar ist und wobei die Klapptreppe eine eigene, ein- oder mehrteilige, fest an dem zugehörigen Wohnwagen oder Wohnmobil anbringbare Halterung umfaßt, an der die übrige Klapptreppe einhängbar ist.

Eine Klapptreppe mit den vorstehend genannten Merkmalen ist aus US-A-3 493 077 bekannt. Neben mehreren Stufen weist diese bekannte Klapptreppe an ihrem oberen Ende eine parallel zu den Stufen verlaufende, aber in Ihrer Fläche vergrößerte Plattform auf. Diese Plattform ragt in Richtung zum zugehörigen Wohnwagen oder Wohnmobil über die Seitenholme hinaus. Mit diesem überstehenden Teil ist die Plattform in eine schubladenartige Führung unterhalb des Bodens des Wohnwagens oder Wohnmobils einschiebbar. In dieser eingeschobenen Position wird die Plattform durch Sperrfedern gegen ein unbeabsichtigtes Herausziehen gesichert. Zum Lösen der Klapptreppe muß die Sicherung manuell gegen die Federkraft zurückgedrückt werden, wonach dann die Klapptreppe zusammen mit Ihrer oberen Plattform aus der Führung herausgezogen werden kann.

Als nachteilig wird bei dieser bekannten Klapptreppe angesehen, daß sie zusätzlich zu den Stufen eine größere, obere Plattform benötigt, die das Gewicht der Klapptreppe merklich erhöht und so deren Handhabung erschwert. Außerdem ist es erforderlich, daß die Führung zur Aufnahme und Halterung der Klapptreppe unter dem Boden des Wohnwagens oder Wohnmobils angebracht werden kann. Dies ist in der Praxis nicht immer möglich, da viele Wohnwagen oder Wohnmobile im Bereich ihrer Tür eine Seiten- oder Heckverkleidung aufweisen, die nach unten hin über die Unterseite des Bodens des Wohnwagens oder Wohnmobils hinausragt. In diesen Fällen wäre es dann erforderlich, zur Einführung der oberen Plattform in die Führung eine passende Durchbrechung in die Verkleidung einzuschneiden, was sehr aufwendig ist und das optische Erscheinungsbild des Wohnwagens oder Wohnmobils erheblich beeinträchtigt.

Eine weitere Klapptreppe für Wohnwagen oder Wohnmobile ist aus US-A-4 720 116 bekannt. Bei dieser Klapptreppe werden die Stufen sowie eine hier ebenfalls vorgesehene größere obere Plattform von Scherenarmpaaren getragen.

Die Scherenarme jedes Scherenärmpaares sind über je eine Hebelmechanik mittels einer verdrehbaren Spindel mit einer Kurbel in ihrer Ausrichtung einstellbar. Ersichtlich ist hier ein sehr hoher Aufwand für das Einstellen der Klapptreppe auf den jeweils vorgefundenen Höhenunterschied zwischen einer Türschwelle des Wohnwagens oder Wohnmobils und dem Untergrund erforderlich. Außerdem ist diese Klapptreppe für eine einmalige Montage mit anschließendem Verbleib am Wohnwagen oder Wohnmobil vorgesehen. Während der Fahrt des Wohnwagens oder Wohnmobils befindet sich die Klapptreppe in einer flachen und nach oben verschwenkten Position, in der sie parallel an der zugehörigen Tür des Wohnwagens oder Wohnmobils anliegt und mechanisch gesichert ist. Ein Abnehmen der Klapptreppe und ein Transport der Klapptreppe bei Nichtgebrauch im Inneren des Wohnwagens oder Wohnmobils ist hier nicht vorgesehen und wäre auch mit einem sehr hohen Aufwand, der nicht praktikabel ist, verbunden.

Für die vorliegende Erfindung stellt sich deshalb die Aufgabe, eine Klapptreppe der eingangs genannten Art zu schaffen, die die vorstehend aufgeführten Nachteile vermeidet und die insbesondere schnell und einfach mit dem Wohnwagen oder Wohnmobil verbindbar und ebenso schnell und einfach von diesem trennbar ist und die zugleich leicht an unterschiedliche zu überbrückende Höhendifferenzen anpaßbar ist, die stabil und doch leicht handhabbar ist und mit der ein sicherer und stolperfreier Einund Ausstieg für Benutzer des Wohnwagens oder Wohnmobils gewährleistet wird.

Eine erste Lösung dieser Aufgabe gelingt erfindungsgemäß mit einer Klapptreppe der eingangs genannten Art, die dadurch gekennzeichnet ist, daß die Halterung mindestens einen aus einer Türschwelle der Türöffnung des Wohnwagens oder Wohnmobils aufragenden Bolzen, und ein damit in lösbaren Eingriff bringbares, mit den oberen Seitenholmen verbundenes Auflageendstück umfaßt.

In dieser Ausführung ist die Klapptreppe mit Hilfe der Halterung schnell und einfach mit der Türschwelle der Türöffnung des Wohnwagens oder Wohnmobils in und außer Eingriff bringbar, was eine vorteilhaft einfache Handhabung ergibt. Der oder die aufragenden Bolzen und das damit in lösbaren Eingriff bringbare, mit den oberen Seitenholmen verbundene Auflageendstück sorgen für eine stabile und damit sichere Verbindung zwischen Klapptreppe und Wohnwagen oder Wohnmobil.

In weiterer Ausgestaltung der Klapptreppe ist vorgesehen, daß das Auflageendstück mit den oberen Seitenholmen gelenkig verbunden ist und daß mindestens eine parallel zu den Seitenholmen verlaufende Hilfsstrebe das Auflageendstück zusätzlich gelenkig mit der unter dem Auflageendstück liegenden oberen Treppenstufe verbindet und parallel zu dieser hält. Damit behält das Auflageendstück nunabhängig vom jeweils vorliegenden Höhenunterschied zwischen der Halterung und dem Untergrund eine definierte, zweckmäßig horizontale Lage, in der es sicher mit dem oder den Bolzen auf der Türschwelle in Eingriff bringbar und haltbar sowie bei Bedarf außer Eingriff.bringbar ist. Hinderliche Verkantungen, die das Einhängen und Aushängen erschweren, können nicht auftreten.

Eine besonders hohe Sicherheit gegen ungewolltes Lösen der Klapptreppe vom Wohnwagen oder Wohnmobil wird dadurch erreicht, daß am Auflageendstück ein beim Einhängen der Klapptreppe selbsttätig in Eingriff tretender und zum Abnehmen der Klapptreppe manuell lösbarer Riegel vorhanden ist.

Eine zweite Lösung dieser Aufgabe gelingt erfindungsgemäß mit einer Klapptreppe der eingangs genannten Art, die dadurch gekennzeichnet ist, daß die Halterung mindestens eine im Querschnitt ovale Querstange umfaßt und daß jeweils das obere Ende des mit der Halterung in Eingriff bringbaren Seitenholms als Gegenstück dazu einen Schlitz mit einer runden Erweiterung an seinem inneren Ende aufweist.

zum Einhängen dieser Klapptreppe in ihrer Halterung muß lediglich die Klapptreppe zunächst mit ihrem unteren Ende schräg nach oben weisend mit ihrem Schlitz voran auf die entsprechend ausgerichtete ovale Querstange aufgeschoben werden; nach einem Verschwenken um etwa 90° nach unten steht dann die Klapptreppe in sicherem, ohne ein Rückschwenken nach oben nicht mehr lösbaren Eingriff mit der Halterung. Ein ungewolltes, zufälliges Lösen der Klapptreppe aus der Halterung ist damit ausgeschlossen. Auch in dieser zweiten Ausführung ist die Klapptreppe mit Hilfe der Halterung schnell und einfach mit dem Wohnwagen oder Wohnmobil in und außer Eingriff bringbar, was auch hier für eine vorteilhaft einfache Handhabung sorgt.

Die vorstehend erläuterten Klapptreppen tragen der Tatsache Rechnung, daß auf dem Markt sehr viele unterschiedliche Wohnwagen und Wohnmobile anzutreffen sind, die sich in ihrer Gestaltung im Bereich der Tür voneinander unterscheiden. Durch die einen Teil der Klapptreppe bildenden Halterungen wird der Vorteil erreicht, daß die Klapptreppe an sich unabhängig vom jeweiligen Wohnwagen oder Wohnmobil immer gleich ausgeführt werden kann, was die Herstellung und Lagerhaltung bei einem Hersteller und Vertreiber der Klapptreppen vereinfacht. Lediglich die Halterung muß an unterschiedliche Wohnwagen oder Wohnmobile angepaßt werden. Dabei ist die Halterung zweckmäßig so ausgeführt, daß sie auch vom Benutzer des Wohnwagens oder Wohnmobils selbst am Fahrzeug angebracht werden kann, insbesondere durch Verschraubung.

Durch die Ausgestaltung der Klapptreppe als Parallelogrammanordnung, wie dies an sich bekannt ist, wird erreicht, daß die Trittstufen immer eine horizontale Ausrichtung aufweisen und daß sich ihr Abstand relativ zueinander sowie zum Boden des Wohnwagens oder Wohnmobils und zum Untergrund entsprechend der gerade vorliegenden Höhendifferenz vom Untergrund bis zum Boden des Wohnwagens oder Wohnmobils selbsttätig passend einstellt. Die Höhendifferenz wird dabei in eine Anzahl von gleichen Stufenhöhen unterteilt, was ein sicheres und stolperfreies Begehen der Klapptreppe gewährleistet.

Zur hohen Sicherheit dieser Klapptreppe trägt bei, daß diese sich sowohl am Wohnwagen oder Wohnmobil als auch auf dem Untergrund abstützt. Durch die Verriegelungseinrichtung ist die Klapptreppe in sich selbst in einer vorgebbaren Stellung fixierbar, so daß sie auch bei hoher Belastung in ihrer eingestellten Position verbleibt. Besondere Fixierungspunkte am Wohnwagen oder Wohnmobil werden für diese Fixierung und Stabilisierung der Klapptreppe vorteilhaft nicht benötigt, da mit der Verriegelungseinrichtung die Klapptreppe in sich fixierbar ist. Gleichzeitig läßt sich die Klapptreppe einfach aushängen und in eine flache, platzsparende Transportstellung überführen, in der sie problemlos innerhalb eines Wohnwagens oder Wohnmobils untergebracht werden kann, ohne dort störend in Erscheinung zu treten.

Weiter schlägt die Erfindung vor, daß die Verriegelungseinrichtung durch mindestens eine diagonal zur Parallelogrammanordnung verlaufende Feststellstrebe gebildet ist. Mittels einer oder mehrerer derartiger Feststellstreben läßt sich die an sich gelenkige Parallelogrammanordnung auf wirksame Weise in einer einmal eingestellten Stellung fixieren, wonach eine stabile und sich nicht mehr selbsttätig verändernde Form und Lage der Klapptreppe gewährleistet ist.

Zur Vereinfachung der Handhabung ist vorteilhaft vorgesehen, daß das eine Ende der Feststellstrebe gelenkig mit einem Teil der Parallelogrammanordnung verbunden ist und daß das andere Ende der Feststellstrebe in unterschiedlichen Stellungen mit einem anderen Teil der Parallelogrammanordnung lösbar verbindbar ist.

Zur Erhöhung der Sicherheit der Verriegelung sind bevorzugt an jeder der beiden Seiten der Klapptreppe jeweils ein oder zwei Feststellstreben vorgesehen.

Weiterhin sind bevorzugt in jeder Feststellstrebe mehrere Bohrungen in einem Rasterabstand angebracht, durch die jeweils ein Verbindungsmittel, insbesondere ein Schrauboder Steckbolzen, zur Verbindung der Feststellstrebe mit dem weiteren Teil der Parallelogrammanordnung hindurchführbar ist. Mit dieser Ausgestaltung wird eine einfache Konstruktion bei hoher Zuverlässigkeit und Stabilität erreicht.

Um die Feststellstrebe(n) der Klapptreppe mit geringem Aufwand und in kurzer Zeit feststellen und lösen zu können, ist bevorzugt jedes Verbindungsmittel mit einem Handgriff zu seiner manuellen, werkzeuglosen Betätigung versehen.

Weiter ist bevorzugt vorgesehen, daß in Gebrauchsstellung der Klapptreppe die beiden Seitenholme eines Seitenholmpaares jeweils in einer vertikalen Ebene übereinander verlaufen. Hierdurch wird eine platzsparende Anordnung der Seitenholme erreicht, bei der die Klapptreppe in ihrer Gesamtbreite nur wenig breiter ist als die Trittstufen selbst.

Eine Weiterbildung der Klapptreppe sieht vor, daß in deren Gebrauchsstellung jeweils das obere Ende nur des oberen Seitenholms jedes Seitenholmpaares der mit dem Wohnwagen oder Wohnmobil verbindbare Teil der Klapptreppe ist und daß jeweils nur der untere Seitenholm jedes Seitenholmpaares mit seinem unteren Ende auf dem Untergrund, auf dem der Wohnwagen oder das Wohnmobil steht, abstützbar ist. Hiermit werden kurze Seitenholme ermöglicht, eine gute Lastverteilung innerhalb der Klapptreppe erzielt und eine sichere Abstützung der Klapptreppe sowohl am Wohnwagen oder Wohnmobil als auch auf dem Untergrund erreicht.

Damit bei weichem Untergrund, wie er beispielsweise auf Campingplätzen häufig anzutreffen ist, die Klapptreppe eine definierte Lage beibehält, wird vorgeschlagen, daß jeweils der untere Seitenholm jedes Seitenholmpaares an seinem unteren Ende einen teller- oder kufenförmigen Standfuß aufweist.

Damit die Standfüße auch bei unterschiedlichen Neigungen der Klapptreppe stets eine möglichst großflächige Auflage auf dem Untergrund haben, sind die Standfüße zweckmäßig jeweils um eine horizontale Achse verschwenkbar an dem Seitenholm angebracht.

Da die Klapptreppe außerhalb des Wohnwagens oder Wohnmobils der Witterung ausgesetzt ist, bestehen deren Teile zweckmäßig aus Leichtmetall, vorzugsweise Aluminium, oder aus Stahl, vorzugsweise rostfrei oder verzinkt.

Ausführungsbeispiele der Erfindung werden im folgenden anhand einer Zeichnung erläutert. Die Figuren der Zeichnung zeigen:
- Figur 1: eine erste Klapptreppe in einer ersten Gebrauchsstellung in Seitenansicht,
- Figur 2: die Klapptreppe aus Figur 1 in einer zweiten Gebrauchsstellung in Seitenansicht,
- Figur 3: die Klapptreppe aus Figur 2 in Draufsicht,
- Figur 4: die erste Klapptreppe in einer platzsparenden Transportstellung in Seitenansicht,
- Figur 5: eine Halterung und deren Zusammenwirken mit einem Seitenholm der ersten Klapptreppe in einer vergrößerten Seitenansicht,
- Figur 6: eine zweite Klapptreppe in Gebrauchsstellung in Seitenansicht,
- Figur 7: eine Halterung der zweiten Klapptreppe in einer Draufsicht,
- Figur 8: die Halterung aus Figur 7 im Querschnitt und
- Figur 9: eine Verriegelung als Teil der Halterung aus Figur 7, teils im Querschnitt, teils in Seitenansicht.

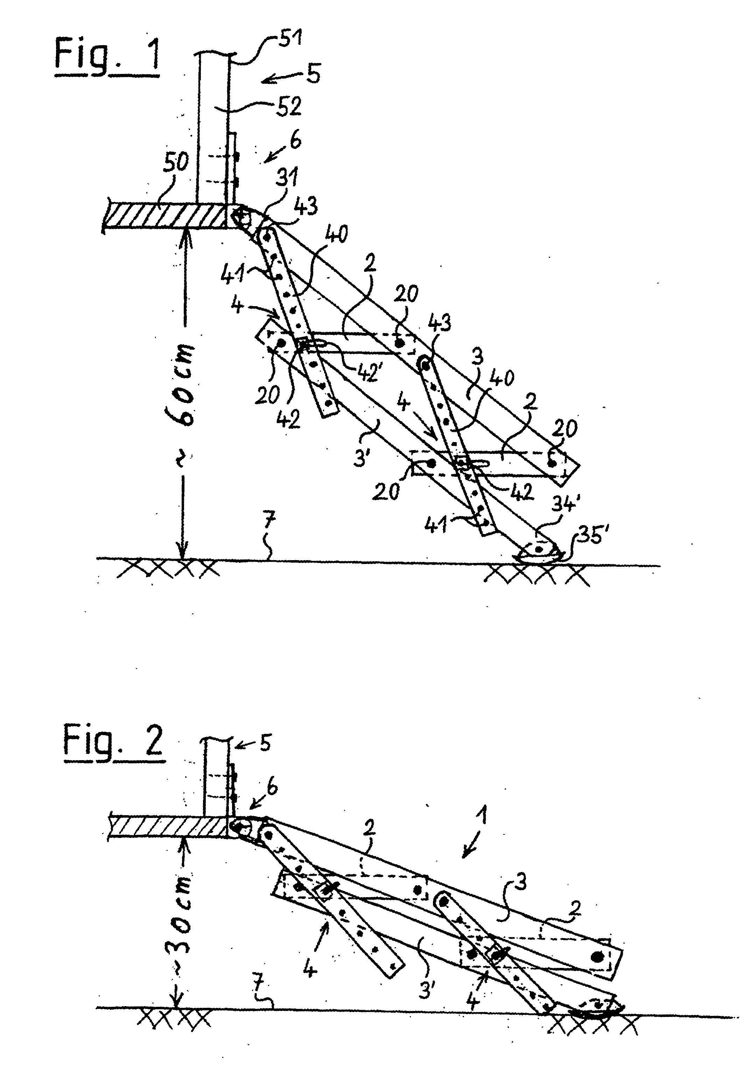

Figur 1 der Zeichnung zeigt links oben einen kleinen Ausschnitt aus einem Wohnwagen 5, wobei hier ein Teil seines Bodens 50 und seiner Seitenwand 51 mit einer Türöffnung 52 sichtbar ist. Außen an der Seitenwand 51 ist eine Halterung 6 angebracht, an der eine Klapptreppe 1 eingehängt ist. Die Klapptreppe 1 erstreckt sich bis zum Untergrund 7, auf dem auch der Wohnwagen 5 steht.

Die Klapptreppe 1 besteht im dargestellten Ausführungsbeispiel aus zwei Trittstufen 2, die mit zwei Paaren von je zwei übereinander in einer vertikalen Ebene angeordneten Seitenholmen 3, 3' zu einer gelenkigen Parallelogrammanordnung verbunden sind. Zur gelenkigen Verbindung dienen Gelenke 20, die jeweils nahe der Vorderkante und Hinterkante jeder Trittstufe 2 und an den dort verlaufenden Seitenholmen 3, 3' vorgesehen sind. In der in Figur 1 gezeigten Gebrauchsstellung verlaufen die Trittstufen horizontal, während die Seitenholme 3, 3' schräg nach unten und außen vom Wohnwagen 5 weg verlaufen. Das obere Ende 31 der beiden oberen Seitenholme 3 ist dabei an der Halterung 6 eingehängt. Das untere Ende 34' der beiden unteren Seitenholme 3' steht dabei mittels je eines Standfußes 35' auf der Oberfläche des Untergrundes 7 auf.

Zur Fixierung der Klapptreppe 1 in dieser Gebrauchsstellung dient eine Verriegelungseinrichtung 4, die hier insgesamt vierfach vorgesehen ist, wobei je zwei Verriegelungseinrichtungen 4 auf den beiden Seiten der Klapptreppe 1 angeordnet sind. Jede Verriegelungseinrichtung 4 wird durch je eine Feststellstrebe 40 gebildet, die jeweils diagonal zur Parallelogrammanordnung aus Trittstufen 2 und Seitenholmen 3, 3' verläuft. Die Feststellstreben 40 sind hier jeweils an ihrem oberen Ende mittels einer Gelenkverbindung 43 verschwenkbar am jeweils oberen Seitenholm 3' angelenkt. Im Verlauf jeder Feststellstrebe 40 sind in dieser mehrere Bohrungen 41 in einem Rasterabstand angebracht, durch die ein Verbindungsmittel 42 hindurchführbar ist. Bei den Verbindungsmitteln 42 handelt es sich hier um jeweils einen Schraubbolzen, der mittels eines Handgriffs 42' werkzeuglos manuell verdrehbar ist. Das Gewindeende jedes Verbindungsmittels 42 ist jeweils mit einer zugehörigen Trittstufe 2 verbindbar, wodurch die gewünschte Verriegelung und Fixierung der Klapptreppe 1 in einer gewünschten Stellung erreicht wird. In diesem Zustand ist die Klapptreppe 1 nicht mehr unbeabsichtigt oder selbsttätig verstellbar, so daß ein sicheres Begehen der Klapptreppe 1 gewährleistet ist.

Figur 2 der Zeichnung zeigt in gleicher Darstellung wie die Figur 1 die Klapptreppe 1 in einer zweiten Gebrauchsstellung, die sich von der Stellung gemäß Figur 1 dadurch unterscheidet, daß in Figur 2 eine wesentlich kleinere Höhendifferenz zwischen dem Wohnwagen 5 und dem Untergrund 7 zu überwinden ist. Aufgrund der geringeren Höhendifferenz verläuft in Figur 2 die Klapptreppe 1 unter einem flacheren Winkel, wobei aber aufgrund der Parallelogrammanordnung auch in dieser Anwendung die Trittstufen 2 horizontal verlaufen und auch hier die einzelnen Stufenhöhen untereinander gleich sind. Die Fixierung der Klapptreppe 1 erfolgt bei der in Figur 2 dargestellten Gebrauchsstellung ebenfalls durch die Verriegelungseinrichtungen 4, wobei hier die Verbindungsmittel 42 durch entsprechend positionierte andere Bohrungen 41 der Feststellstreben 40 geführt sind.

Wie die Figuren 1 und 2 in einer Zusammenschau deutlich zeigen, ist die Klapptreppe 1 bei unterschiedlichen Höhendifferenzen zwischen dem Wohnwagen 5 und dem Untergrund 7 einsetzbar, wobei stets die Höhendifferenz in gleiche Stufenhöhen unterteilt wird. Damit ist das Begehen der Klapptreppe 1 in jedem Falle sicher und ohne Stolpergefahren möglich, da gefährliche unterschiedliche Stufenhöhen hier nicht auftreten.

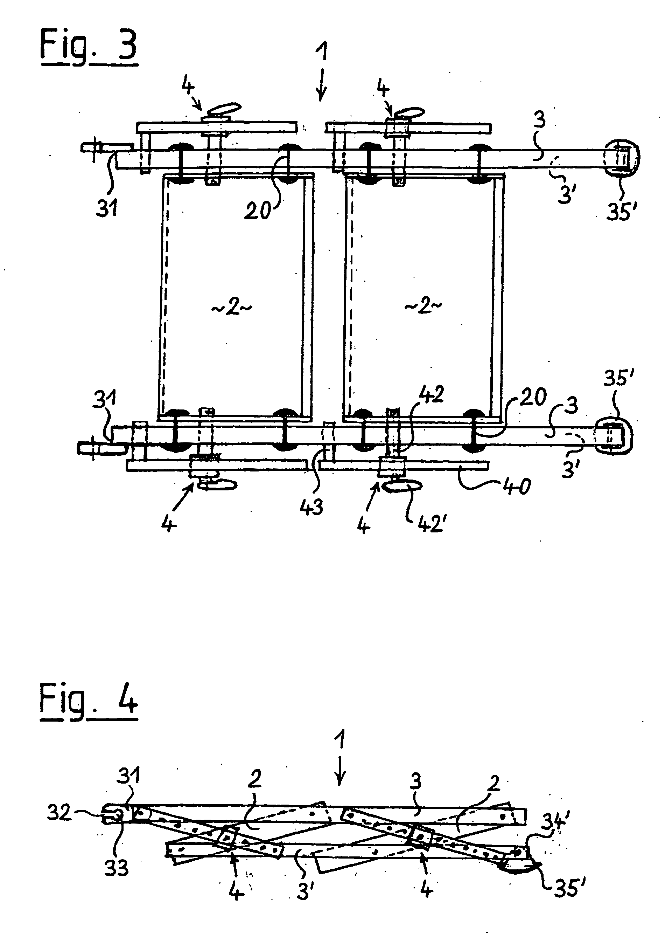

Figur 3 der Zeichnung zeigt die Klapptreppe 1 in Draufsicht, nun ohne den Ausschnitt des Wohnwagens. Oben und unten in Figur 3 verlaufen die Seitenholmpaare, wobei hier in der Draufsicht nur der jeweils obere Seitenholm 3 sichtbar ist. Mit den Seitenholmen 3, 3' sind die Trittstufen 2 an deren seitlichen Kanten über die Gelenke 20 gelenkig verbunden. Jeweils außerhalb der beiden Seitenholme 3, 3' sind die Verriegelungseinrichtungen 4 mit den Feststellstreben 40 und den Verbindungsmitteln 42 angeordnet. Mittels der Gelenkverbindung 43 ist jede Feststellstrebe 40 an dem jeweils oberen Seitenholm 3 gelenkig angebracht. Ganz außen liegt jeweils der Handgriff 42', mit dem das Verbindungsmittel 42 manuell betätigbar ist.

Ganz links in Figur 3 ist jeweils das obere Ende 31 der beiden oberen Seitenholme 3 sichtbar, die mit der Halterung an dem Wohnwagen in Eingriff bringbar sind. Ganz rechts in Figur 3 schließlich sind die beiden Standfüße 35' sichtbar, die am unteren Ende der hier verdeckten beiden unteren Seitenholme 3' angelenkt sind.

Figur 4 der Zeichnung zeigt in einer Seitenansicht die Klapptreppe 1 in ihrer Transportstellung, in der sie platzsparend zusammengelegt ist. In diesem Zustand verlaufen die Seitenholme 3, 3' jeweils mit einem minimalen Abstand zueinander, so daß die Höhe der Klapptreppe 1 in diesem Zustand ein Minimum erreicht. Die beiden Trittstufen 2 und die Verriegelungseinrichtungen 4 ragen dabei auch nur noch minimal über die Seitenholme 3, 3' nach oben und unten vor, so daß für die Unterbringung der Klapptreppe bei Nichtgebrauch nur relativ wenig Raum beansprucht wird. Auch in dieser Lager- oder Transportstellung kann die Klapptreppe 1 durch die Verriegelungseinrichtung 4 in ihrer Stellung verriegelt werden, so daß auch bei der Handhabung der zusammengelegten Klapptreppe 1 keine Gefahr durch ungewollte Verstellung besteht.

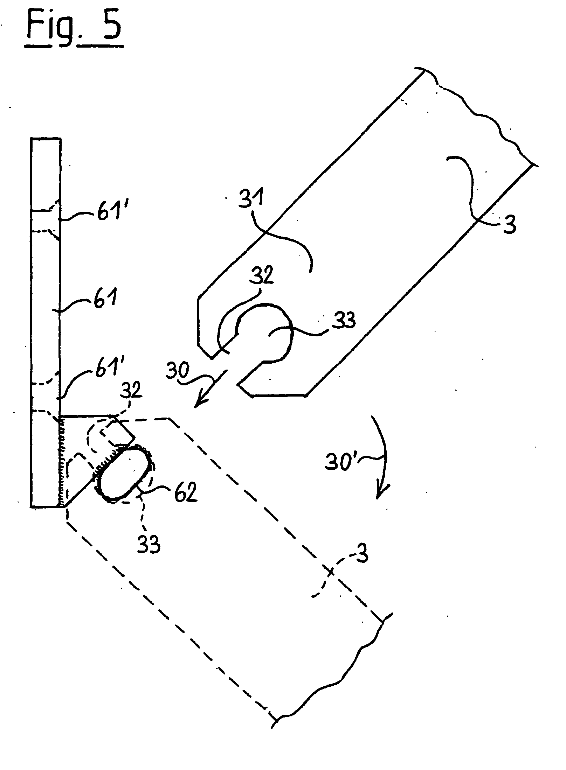

Figur 5 zeigt eine Halterung 6 im Zusammenwirken mit dem oberen Ende 31 der beiden oberen Seitenholme 3 der Klapptreppe 1 in Seitenansicht. Die Halterung 6 besteht hier aus einer einzelnen oder aus zwei nebeneinander angeordneten flachen Halteplatten 61, wobei jede Halteplatte mit mehreren Schraubenbohrungen 61' versehen ist. Durch diese Bohrungen 61' können von außen her Schrauben in die in Figur 1 und 2 dargestellte Seitenwand 51 des Wohnwagens 5 eingeschraubt werden, wodurch die Halteplatte 61 sicher am Wohnwagen 5 fixierbar ist. Nahe dem unteren Rand der Halteplatte 61 ist über mindestens zwei kleine Konsolen eine Querstange 62 angebracht, hier angeschweißt. Die Querstange 62 ist im Querschnitt oval, wobei der größere Durchmesser des Ovals hier unter einem Winkel von etwa 45° schräg nach oben und außen verläuft.

Das obere Ende 31 der beiden oberen Seitenholme 3, von denen hier nur der dem Betrachter zugewandte sichtbar ist, besitzt einen Schlitz 32 mit einer sich daran anschließenden runden Erweiterung 33. Die Weite des Schlitzes 32 ist dabei so bemessen, daß sie, zuzüglich des nötigen Bewegungsspiels, dem kleineren Durchmesser des Ovals der Querstange 62 entspricht; der Durchmesser der Erweiterung 33 entspricht, ebenfalls zuzüglich des nötigen Bewegungsspiels, dem größeren Durchmesser des Ovals der Querstange 62. Zum Einhängen der Klapptreppe 1 in ihre Halterung 6 werden die Seitenholme 3 zunächst so angehoben, daß sie schräg nach oben und außen verlaufen, wie in Figur 5 in durchgezogenen Linien dargestellt. Durch Vorbewegen der Seitenholme 3 in Richtung des Bewegungspfeils 30 gelangt die Klapptreppe 1 in Eingriff mit der Querstange 62. Durch anschließendes Verschwenken der Seitenholme 3 mit ihrem freien Ende nach unten gemäß dem Schwenkpfeil 30' wird der Schlitz 32 gegenüber dem größeren Durchmesser des Ovals der Querstange 62 um etwa 90° verdreht, so daß dann ein Trennen der Seitenholme 3 von der Halterung 6 durch einfaches Bewegen in Axialrichtung der Seitenholme 3 unmöglich ist. Damit ist ein ungewolltes Lösen der Klapptreppe 1 von ihrer Halterung 6 ausgeschlossen.

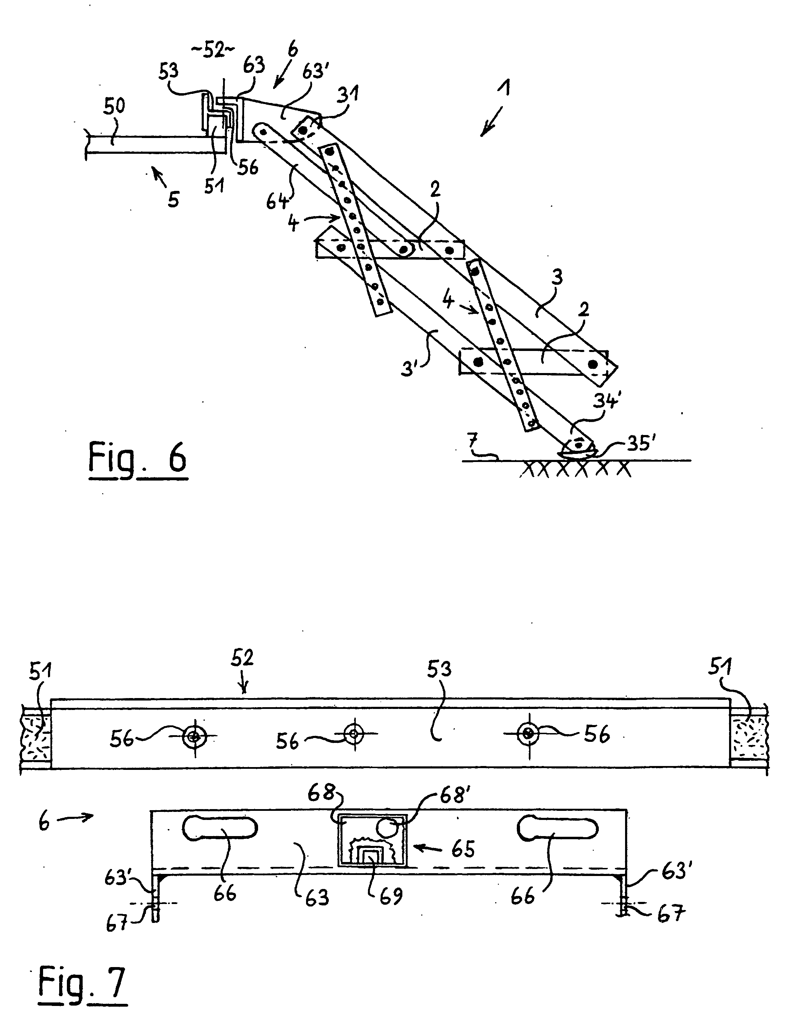

Figur 6 zeigt in gleicher Darstellung wie Figur 1 eine zweite Ausführung der Klapptreppe 1, die sich insbesondere hinsichtlich der Halterung 6 von dem zuvor beschriebenen Ausführungsbeispiel unterscheidet. Die Halterung 6, mit der die Klapptreppe 1 an einem zugehörigen Wohnwagen oder Wohnmobil 5 lösbar gehaltert werden kann, besteht hier aus einem Auflageendstück 63 in Form eines Winkelprofils, dessen oberer Schenkel horizontal und dessen unterer Schenkel vertikal verläuft. Mit seinem oberen, horizontalen Schenkel ist das Auflageendstück 63 auf eine Türschwelle 53 einer Türöffnung 52 in der Wand 51 des Wohnwagens oder Wohnmobils 5 auflegbar. In dieser Stellung ist das Auflageendstück 63 mittels mehrerer nach oben vorragender Bolzen 56 festlegbar.

Von dem Auflageendstück 63 erstreckt sich an deren Stirnenden je eine Seitenwange 63' in Richtung vom Wohnwagen 5 weg nach außen. An diesen beiden Seitenwangen 63', von denen in der Figur 6 nur die dem Betrachter zugewandte Seitenwange erkennbar ist, ist jeweils das obere Ende 31 der beiden oberen Seitenholme 3 gelenkig angebracht. Der obere Seitenholm 3 ist hier, wie schon anhand von Figur 1 erläutert, mit den Stufen 2 verbunden, die ihrerseits wieder mit den beiden unteren Seitenholmen 3' verbunden sind. Zur Fixierung der Stellung der durch die Seitenholme 3, 3' und Stufen 2 gebildeten Parallelogrammanordnung dient auch hier die Verriegelungseinrichtung 4, die gegenüber dem ersten Ausführungsbeispiel unverändert ist.

Weiterhin ist mit jeder Seitenwange 63' hier je eine Hilfsstrebe 64 verbunden, die parallel zum oberen Seitenholm 3 verläuft und ebenso wie dieser mit der oberen Stufe 2 gelenkig verbunden ist. Damit bilden die obere Hälfte des oberen Seitenholms 3, die Hilfsstrebe 64, die Seitenwange 63' und die obere Stufe 2 ein zweites, kleineres Parallelogramm. Diese Parallelogrammanordnung sorgt dafür, daß das Auflageendstück 63 stets seine in Figur 6 gezeigte Lage mit einem horizontalen Verlauf des oberen Schenkels beibehält, unabhängig davon, wie hoch der durch die Klapptreppe 1 zu überwindende Höhenunterschied ist. Damit ist das Einhängen des Auflageendstücks 63 in die auf der Türschwelle 53 vorgesehenen Bolzen 56 jederzeit sicher und zuverlässig möglich, da störende Verkantungen des Auflageendstücks 63 nicht auftreten.

Figur 7 zeigt in Draufsicht die Türschwelle 53 mit den drei darin vorgesehenen, nach oben vorragenden Kopfbolzen 56 und dem zugehörigen Auflageendstück 63 der Halterung 6. Der übrige Teil der Klapptreppe 1, der mit dem Auflageendstück 63 verbunden ist, ist hier nicht dargestellt.

Zur Verbindung des Auflageendstücks 63 mit der Türschwelle 53 wird das Auflageendstück 63 zunächst aus der in Figur 7 gezeigten Stellung vorwärts in Richtung zur Türschwelle 53 bewegt, bis die schlüssellochförmigen Ausnehmungen 66 mit ihrem größeren Teil genau über den Bolzen 56 liegen. In dieser Position wird das Auflageendstück 63 abgesenkt, wodurch die Bolzen 56 mit ihren Köpfen durch die weiteren Bereiche der Ausnehmungen 66 hindurchtreten. Durch Verschieben des Auflageendstücks 63 gemäß Figur 7 nach links wird der schmalere Bereich der schlüssellochförmigen Ausnehmungen 66 mit den Kopfbolzen 56 in Eingriff gebracht, wodurch ein Abheben des Auflageendstücks 63 nach oben nicht mehr möglich ist.

Zur Sicherung des Auflageendstücks 63 gegen eine ungewollte Verschiebung dient ein Riegel 65. Dieser Riegel 65 besteht aus einer Riegelplatte 68 mit einer Bohrung 68'. Die Bohrung 68' ist an das Durchmessermaß des mittleren Kopfbolzens 56 in der Türschwelle 53 angepaßt. Von der Riegelplatte 68 erstreckt sich ein Führungsbolzen 69 in Form eines Vierkants nach unten in eine Vertikalführung, wodurch die Riegelplatte 68 in Vertikalrichtung, d.h. senkrecht zur Zeichnungsebene der Figur 7, verschiebbar ist. Durch eine in Figur 7 nicht sichtbare Feder ist die Riegelplatte 68 in Richtung nach unten vorbelastet. Durch die zuvor beschriebene Bewegung des Auflageendstücks 63 nach links wandert die Bohrung 68' in der Riegelplatte 68 genau über den mittleren Bolzen 56. In dieser Stellung drückt dann die Feder die Riegelplatte 68 nach unten, wonach diese dann den Bolzen 56 formschlüssig umgibt. Eine seitliche Verschiebung des Auflageendstücks 63 ist nun unterbunden.

Links und rechts von der Türschwelle 53 ist jeweils noch ein kurzer Abschnitt der Wand 51 des zugehörigen Wohnwagens oder Wohnmobils sichtbar. Von dem Auflageendstück 63 erstreckt sich ganz links und ganz rechts die beiden Seitenwangen 63' mit ihren Bohrungen 67 nach außen.

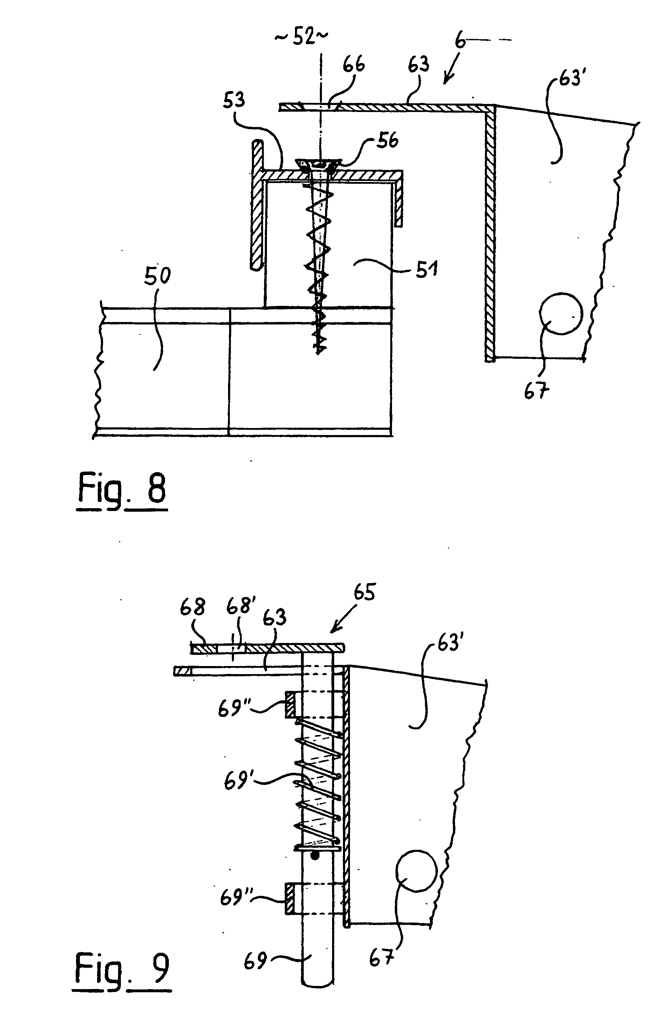

Figur 8 zeigt die Halterung 6 aus Figur 6 und 7 in einem Querschnitt. Unten ist ein kleiner Ausschnitt aus dem Boden 50 des zugehörigen Wohnwagens oder Wohnmobils erkennbar. Nach oben hin schließt sich an den Boden 50 die Wand 51 an, in der die Türöffnung 52 mit der Türschwelle 53 liegt. In die Türschwelle 53 sind die Bolzen 56 in Form von Schrauben eingedreht. Die Bolzen 56 haben jeweils einen hinterschnittenen Kopf, der hier durch einen den Schraubenkopf umgebenden Konusring mit einer untergelegten Dichtung gebildet ist.

Oberhalb und rechts von der Türschwelle 53 ist das Auflageendstück 63 der Halterung 6 sichtbar, von dem sich wieder eine der Seitenwangen 63' mit ihrer Bohrung 67 nach außen erstreckt. Oberhalb des Bolzens 56 ist im Auflageendstück 63 eine der schlüssellochförmigen Ausnehmungen 66 erkennbar.

Wie die Figur 8 veranschaulicht, ist das horizontale, auf die Türschwelle 53 aufzulegende Teil des Auflageendstücks 63 so dünn, daß die Funktion einer die Türöffnung 52 verschießenden Tür hierdurch nicht beeinträchtigt wird. Das Auflageendstück 63 ist z.B. ein Abschnitt eines Aluminiumprofils.

Figur 9 schließlich zeigt den Riegel 65 in einem Querschnitt, teils in Seitenansicht, in seiner entriegelten Stellung. Der Riegel 65 wird durch die oben liegende Riegelplatte 68 und den diese tragenden und führenden, im Querschnitt vierkantigen Führungsbolzen 69 gebildet. Der Führungsbolzen 69 ist in einer Führung 69'' vertikal verschiebbar. Auf dem Führungsbolzen 69 sitzt im Bereich zwischen den beiden Führungen 69'' eine Schraubendruckfeder 69', die den Führungsbolzen 69 und die Riegelplatte 68 nach unten hin vorbelastet. Um die in Figur 9 sichtbare Position zu erreichen, muß auf das untere Ende des Führungsbolzens 69 manuell eine Kraft nach oben ausgeübt werden, wodurch die Riegelplatte 68 in ihre Entriegelungsstellung gehoben wird. Durch diese Hebebewegung kommt die Bohrung 68' in der Riegelplatte 68 von dem Kopf des zugehörigen Bolzens 56 frei. In dieser Stellung kann dann das Auflageendstück 63 in eine Richtung gemäß Figur 7 nach rechts verschoben und dann durch Abheben von der Türschwelle 53 getrennt werden.

## Patentansprüche

1. Klapptreppe (1) für Wohnwagen oder Wohnmobile (5), die unterhalb einer Türöffnung (52) des Wohnwagens oder Wohnmobils (5) lösbar eingehängt werden kann, die mehrere in Gebrauchsstellung horizontale, über Verbindungselemente gelenkig miteinander verbundene Trittstufen (2) umfaßt, wobei die Verbindungselemente durch zwei Paare von parallelen Seitenholmen (3, 3') gebildet sind, wobei jedes Seitenholmpaar (3, 3') mit den Stufen (2) eine gelenkige Parallelogrammanordnung zur Anpassung an unterschiedliche Höhendifferenzen zwischen Wohnwagen oder Wohnmobil (5) und einem Untergrund (7), auf dem der Wohnwagen oder das Wohnmobil (5) steht, bildet, wobei die Klapptreppe (1) zwischen ihrer ausgeklappten Gebrauchsstellung und einer eingeklappten, platzsparenden Transportstellung verstellbar ist, wobei die Parallelogrammanordnung durch wenigstens eine Verriegelungseinrichtung (4) in vorgebbaren Stellungen festlegbar ist und wobei die Klapptreppe (1) eine eigene, ein- oder mehrteilige, fest an dem zugehörigen Wohnwagen oder Wohnmobil (5) anbringbare Halterung (6) umfaßt, an der die übrige Klapptreppe (1) einhängbar ist,
**dadurch gekennzeichnet,**
**daß** die Halterung (6) mindestens einen aus einer Türschwelle der Türöffnung (52) des Wohnwagens oder Wohnmobils (5) aufragenden Bolzen (56) und ein damit in lösbaren Eingriff bringbares, mit den oberen Seitenholmen (3) verbundenes Auflageendstück (63) umfaßt.

2. Klapptreppe nach Anspruch 1, **dadurch gekennzeichnet, daß** das Auflageendstück (63) mit den oberen Seitenholmen (3) gelenkig verbunden ist und daß mindestens eine parallel zu den Seitenholmen (3, 3').verlaufende Hilfsstrebe (64) das Auflageendstück (63) zusätzlich gelenkig mit der unter dem Auflageendstück (63) liegenden oberen Treppenstufe (2) verbindet und parallel zu dieser hält.

3. Klapptreppe nach Anspruch 1 oder 2, **dadurch gekennzeichnet, daß** am Auflageendstück (63) ein beim Einhängen der Klapptreppe (1) selbsttätig in Eingriff tretender und zum Abnehmen der Klapptreppe (1) manuell lösbarer Riegel (65) vorhanden ist.

4. Klapptreppe (1) für Wohnwagen oder Wohnmobile (5), die unterhalb einer Türöffnung (52) des Wohnwagens oder Wohnmobils (5) lösbar eingehängt werden kann, die mehrere in Gebrauchsstellung horizontale, über Verbindungselemente gelenkig miteinander verbundene Trittstufen (2) umfaßt, wobei die verbindungselemente durch zwei Paare von parallelen Seitenholmen (3, 3') gebildet sind, wobei jedes Seitenholmpaar (3, 3') mit den Stufen (2) eine gelenkige Parallelogrammanordnung zur Anpassung an unterschiedliche Höhendifferenzen zwischen Wohnwagen oder Wohnmobil (5) und einem Untergrund (7), auf dem der Wohnwagen oder das Wohnmobil (5) steht, bildet, wobei die Klapptreppe (1) zwischen ihrer ausgeklappten Gebrauchsstellung und einer eingeklappten, platzsparenden Transportstellung verstellbar ist, wobei die Parallelogrammanordnung durch wenigstens eine Verriegelungseinrichtung (4) in vorgebbaren Stellungen festlegbar ist und wobei die Klapptreppe (1) eine eigene, ein- oder mehrteilige, fest an dem zugehörigen Wohnwagen oder Wohnmobil (5) anbringbare Halterung (6) umfaßt, an der die übrige Klapptreppe (1) einhängbar ist,
**dadurch gekennzeichnet,**
**daß** die Halterung (6) mindestens eine im Querschnitt ovale Querstange (62) umfaßt und daß jeweils das obere Ende (31) des mit der Halterung (6) in Eingriff bringbaren Seitenholms (3) als Gegenstück dazu einen Schlitz (32) mit einer runden Erweiterung (33) an seinem inneren Ende aufweist.

5. Klapptreppe nach einem der vorangehenden Ansprüche, **dadurch gekennzeichnet, daß** die Verriegelungseinrichtung (4) durch mindestens eine diagonal zur Parallelogrammanordnung verlaufende Feststellstrebe (40) gebildet ist.

6. Klapptreppe nach Anspruch 5, **dadurch gekennzeichnet, daß** das eine Ende der Feststellstrebe (40) gelenkig mit einem Teil der Parallelogrammanordnung verbunden ist und daß das andere Ende der Feststellstrebe (40) in unterschiedlichen Stellungen mit einem anderen Teil der Parallelogrammanordnung lösbar verbindbar ist.

7. Klapptreppe nach Anspruch 5 oder 6, **dadurch gekennzeichnet, daß** an jeder der beiden Seiten der Klapptreppe (1) jeweils ein oder zwei Feststellstreben (40) vorgesehen sind.

8. Klapptreppe nach einem der Ansprüche 5 bis 7, **dadurch gekennzeichnet, daß** in jeder Feststellstrebe (40) mehrere Bohrungen (41) in einem Rasterabstand angebracht sind, durch die jeweils ein Verbindungsmittel (42), insbesondere ein Schraub- oder Steckbolzen, zur Verbindung der Feststellstrebe (40) mit dem weiteren Teil der Parallelogrammanordnung hindurchführbar ist.

9. Klapptreppe nach Anspruch 8, **dadurch gekennzeichnet, daß** jedes Verbindungsmittel (42) mit einem Handgriff (42') zu seiner manuellen, werkzeuglosen Betätigung versehen ist.

10. Klapptreppe nach einem der vorangehenden Ansprüche, **dadurch gekennzeichnet, daß** in Gebrauchsstellung der Klapptreppe (1) die beiden Seitenholmen (3, 3') eines Seitenholmpaares (3, 3') jeweils in einer vertikalen Ebene übereinander verlaufen.

11. Klapptreppe nach Anspruch 10, **dadurch gekennzeichnet, daß** in Gebrauchsstellung der Klapptreppe (1) jeweils das obere Ende (31) nur des oberen Seitenholms (3) jedes Seitenholmpaares (3, 3') der mit dem Wohnwagen oder Wohnmobil (5) verbindbare Teil der Klapptreppe (1) ist und daß jeweils nur der untere Seitenholm (3' ) jedes Seitenholmpaares (3,- 3') mit seinem unteren Ende (34') auf dem Untergrund (7), auf dem der Wohnwagen oder das Wohnmobil (5) steht, abstützbar ist.

12. Klapptreppe nach Anspruch 11, **dadurch gekennzeichnet, daß** jeweils der untere Seitenholm (3' ) jedes Seitenholmpaares (3, 3') an seinem unteren Ende (34') einen teller- oder kufenförmigen Standfuß (35') aufweist.

13. Klapptreppe nach Anspruch 12, **dadurch gekennzeichnet, daß** die Standfüße (35') jeweils um eine horizontale Achse verschwenkbar an dem Seitenholm (3') angebracht sind.

14. Klapptreppe nach einem der vorhergehenden Ansprüche,
**dadurch gekennzeichnet, daß** deren Teile aus Leichtmetall, vorzugsweise Aluminium, oder aus Stahl, vorzugsweise rostfrei oder verzinkt, bestehen.

## Claims

1. Folding step (1) for living trailers or motor homes (5), which can be hung in beneath a door opening (52) of the living trailer or motor home (5) in a detachable manner and which comprises a multitude of treads (2) that are arranged in horizontal direction when being in their position of use and are pin-connected to each other via connection elements, wherein the connection elements are formed by two pairs of parallel side pieces (3, 3'), wherein each pair of side pieces (3, 3') forms, in cooperation with the treads (2), a pin-connected parallelogram arrangement.to be adjusted to various height differences between the living trailer or motor home (5) and a base (7) where the living trailer or motor home (5) is parked, wherein the folding step (1) can be adjusted between its fold-out position of use and a fold-in space-saving transport position, wherein the parallelogram arrangement can be defined to be in specifiable positions by at least one locking device (4) and wherein the folding step (1) comprises its own single-piece or multi-piece holding device (6) that can be mounted to the associated living trailer or motor home (5) in a non-detachable manner, with the remaining folding step (1) being able of being hung in said holding device (6),
**characterized in that**
the holding device (6) comprises at least one bolt (56) projecting out of a threshold of the door opening (52) of the living trailer or motor home (5) and an end support piece (63) that can be brought in detachable engagement therewith and is connected to the upper side pieces (3).

2. Folding step according to Claim 1, **characterized in that** the end support piece (63) is pin-connected to the upper side pieces (3) and that at least one auxiliary strut (64) extending in parallel to the side pieces (3, 3') additionally pin-connects the end support piece (63) to the upper tread (2) positioned beneath the end support piece (63) and holds same in parallel thereto.

3. Folding step according to Claim 1 or 2, **characterized in that** a locking bar (65) that engages automatically when the folding step (1) is hung in and can be disengaged manually to remove the folding step (1) is provided at the end support piece (63).

4. Folding step (1) for living trailers or motor homes (5), which can be attached beneath a door opening (52) of the living trailer or motor home (5) in a detachable manner and which comprises a multitude of treads (2) that are arranged in horizontal direction when being in their position of use and are pin-connected to each other via connection elements, wherein the connection elements are formed by two pairs of parallel side pieces (3, 3'), wherein each pair of side pieces (3, 3') forms, in cooperation with the treads (2), a pin-connected parallelogram arrangement to be adjusted to various height differences between the living trailer or motor home (5) and a base (7) where the living trailer or motor home (5) is parked, wherein the folding step (1) can be adjusted between its fold-out position of use and a fold-in space-saving transport position, wherein the parallelogram arrangement can be defined to be in specifiable positions by at least one locking device (4) and wherein the folding step (1) comprises its own single-piece or multi-piece holding device (6) that can be mounted to the associated living trailer or motor home (5) in a non-detachable manner, with the remaining folding step (1) being able of being hung in said holding device (6),
**characterized in that**
the holding device (6) comprises at least one cross-bar (62) with oval cross-section and that the upper end (31) of each of the side pieces (3) that can be brought in engagement with the holding device (6) comprises, as a counterpart thereto, a slot (32) with a circular extension (33) at its inner end.

5. Folding step according to anyone of the preceding claims, **characterized in that** the locking device (4) is formed by at least one locking strut (40) extending diagonally in relation to the parallelogram arrangement.

6. Folding step according to Claim 5, **characterized in that** one end of the locking strut (40) is pin-connected to a part of the parallelogram arrangement and that the other end of the locking strut (40) can be connected to another part of the parallelogram arrangement in a detachable manner and in various positions.

7. Folding step according to Claim 5 or 6, **characterized in that** one or two locking struts (40) are provided at each of the two sides of the folding step (1).

8. Folding step according to anyone of Claims 5 through 7, **characterized in that** a multitude of holes (41) are provided in each locking strut (40) at a grid spacing, wherein a connection device (42), in particular a screw or stop bolt, can be put through said holes (41) to connect the locking strut (40) to the further part of the parallelogram arrangement.

9. Folding step according to Claim 8, **characterized in that** each connection device (42) is provided with a handle (42') to permit its manual actuation without tools.

10. Folding step according to anyone of the preceding claims, **characterized in that**, with the folding step (1) being in its position of use, the two side pieces (3, 3') of a pair of side pieces (3, 3') are each extending one above the other in a vertical plane.

11. Folding step according to Claim 10, **characterized in that**, with the folding step (1) being in its position of use, the upper end of only the upper side piece (3) of each pair of side pieces (3, 3') represents the part of the folding step (1) that can be connected to the living trailer or motor home (5) and that only the lower side piece (3') of each pair of side pieces (3, 3') can, with its lower end (34' ), be supported on the base (7) where the living trailer or motor home (5) is parked.

12. Folding step according to Claim 11, **characterized in that** the lower side piece (3') of each pair of side pieces (3, 3') comprises a disk-shaped or skid-shaped supporting foot (35') at its lower end (34').

13. Folding step according to Claim 12, **characterized in that** the supporting feet (35') are each attached to the side piece (3') such that they can each be swivelled about a horizontal axis.

14. Folding step according to anyone of the preceding claims, **characterized in that** its parts are made of light metal, preferably aluminium, or of steel, preferably stainless or galvanized steel.

## Revendications

1. Escalier pliant (1) pour caravanes ou autocaravanes (5), qui peut être accroché de façon amovible au-dessous d'une ouverture de portière (52) de la caravane ou de l'autocaravane (5) et qui comprend plusieurs marches (2) horizontales dans la position d'utilisation et reliées entre elles d'une manière articulée par l'intermédiaire d'éléments de liaison, dans lequel les éléments de liaison sont formés par deux paires de montants latéraux parallèles (3, 3'), chaque paire de montants latéraux (3, 3') formant, avec les marches (2) un agencement en forme de parallélogramme articulé permettant une adaptation à différentes différences de hauteur entre la caravane ou l'autocaravane (5) et un sol (7), sur lequel est situé la caravane ou l'autocaravane (5), l'escalier pliant (1) étant réglable entre sa position d'utilisation déployée par rabattement et une position de transport rétractée par rabattement et peu encombrante, l'agencement en forme de parallélogramme pouvant être fixé dans des positions pouvant être prédéterminées, à l'aide d'au moins un dispositif de verrouillage (4), et l'escalier pliant (1) comportant un dispositif propre de retenue (6) formé d'un ou de plusieurs éléments et qui peut être monté de façon fixe sur la caravane ou l'autocaravane associé (5) et sur lequel le reste de l'escalier pliant (1) peut être accroché,
**caractérisé en ce**
**que** le dispositif de retenue (6) comprend au moins un goujon (56) qui fait saillie hors d'un seuil de l'ouverture de portière (52) de la caravane ou de l'autocaravane (5), et une pièce d'extrémité d'appui (63) pouvant être amenée à engrener de façon amovible avec ce goujon et reliée aux montants latéraux supérieurs (3).

2. Escalier pliant selon la revendication 1,
**caractérisé en ce que** la pièce d'extrémité d'appui (63) est reliée d'une manière articulée aux montants latéraux supérieurs (3) et qu'au moins une entretoise auxiliaire (64), qui est parallèle aux montants latéraux (3, 3'), relie la pièce d'extrémité d'appui (63) à la marche supérieure (2) de l'escalier, qui est située au-dessous de la pièce d'extrémité d'appui (63), et maintient cette pièce d'extrémité d'appui parallèle à cette marche.

3. Escalier pliant selon la revendication 1 ou 2, **caractérisé en ce que** sur la pièce d'extrémité d'appui (63) est présent un verrou (65) qui est amené à engrener automatiquement lors de l'accrochage de l'escalier pliant (1) et peut être détaché manuellement pour le retrait de l'escalier pliant (1).

4. Escalier pliant (1) pour caravanes ou autocaravanes (5), qui peut être accroché de façon amovible au-dessous d'une ouverture de portière (52) de la caravane ou de l'autocaravane (5) et qui comprend plusieurs marches (2) horizontales dans la position d'utilisation et reliées entre elles d'une manière articulée par l'intermédiaire d'éléments de liaison, dans lequel les éléments de liaison sont formés par deux paires de montants latéraux parallèles (3, 3'), chaque paire de montants latéraux (3, 3') formant, avec les marches (2) un agencement en forme de parallélogramme articulé permettant une adaptation à différentes différences de hauteur entre la caravane ou l'autocaravane (5) et un sol (7), sur lequel est situé la caravane ou l'autocaravane (5), l'escalier pliant (1) étant réglable entre sa position d'utilisation déployée par rabattement et une position de transport rétractée par rabattement et peu encombrante, le dispositif en forme de parallélogramme pouvant être fixé dans des positions pouvant être prédéterminées, à l'aide d'au moins un dispositif de verrouillage (4), et l'escalier pliant (1) comporte un dispositif propre de retenue (6) formé d'un ou de plusieurs éléments et qui peut être monté de façon fixe sur la caravane ou l'autocaravane associé (5) et sur lequel le reste de l'escalier pliant (1) peut être accroché,
**caractérisé en ce**
**que** le dispositif de retenue (6) comprend au moins une barre transversale (62) ovale en coupe transversale et que respectivement l'extrémité supérieure (31) du montant latéral (3) pouvant être amenée à engrener avec le dispositif de retenue (6) comporte, en tant que pièce antagoniste de la barre transversale, une fente (32) possédant au niveau de son extrémité intérieure une partie élargie circulaire (33).

5. Escalier pliant selon l'une des revendications précédentes, **caractérisé en ce que** le dispositif de verrouillage (4) est formé par au moins une entretoise de fixation (40) qui s'étend en diagonale par rapport au dispositif en forme de parallélogramme.

6. Escalier pliant selon la revendication 5, **caractérisé en ce qu'**une extrémité de l'entretoise de fixation (40) est reliée d'une manière articulée à une partie du dispositif en forme de parallélogramme et que l'autre partie de l'entretoise de fixation (40) peut être reliée de façon amovible dans différentes positions à une autre partie du dispositif en forme de parallélogramme.

7. Escalier pliant selon la revendication 5 ou 6, **caractérisé en ce que** respectivement une ou deux entretoises de fixation (40) sont prévues sur chacun des deux côtés de l'escalier pliant (1).

8. Escalier pliant selon l'une des revendications 5 à 7, **caractérisé en ce que** dans chaque entretoise de fixation (40) sont formés, selon un pas de répartition en réseau, plusieurs perçages (41) dans lesquels on peut introduire respectivement un moyen de liaison (42), notamment une vis ou un goujon enfichable, servant à relier l'entretoise de fixation (40) à l'autre partie du dispositif en forme de parallélogramme.

9. Escalier pliant selon la revendication 8, **caractérisé en ce que** chaque moyen de liaison (42) est équipé d'une poignée (42') pour son actionnement manuel, sans outil.

10. Escalier pliant selon l'une des revendications précédentes, **caractérisé en ce que** lorsque l'escalier pliant (1) est dans la position d'utilisation, les deux montants latéraux (3, 3') d'une paire de montants latéraux (3, 3') s'étendent respectivement en étant superposés dans un plan vertical.

11. Escalier pliant selon la revendication 10, **caractérisé en ce que** lorsque l'escalier pliant (1) est dans la position d'utilisation, respectivement l'extrémité supérieure (31) uniquement du montant latéral supérieur (3) de chaque paire de montants latéraux (3, 3') est la partie de l'escalier pliant (1) qui peut être reliée à la caravane ou à l'autocaravane (5) et que respectivement seul le montant latéral inférieur (3') de chaque paire de montants latéraux (3, 3') peut prendre appui par son extrémité inférieure (34') sur le sol (7), sur lequel est disposée la caravane ou l'autocaravane (5).

12. Escalier pliant selon la revendication 11, **caractérisé en ce que** respectivement le montant latéral inférieur (3') de chaque paire de montants latéraux (3, 3') comporte, au niveau de son extrémité inférieure (34'), un pied d'appui (35') en forme de coupelle ou de patin.

13. Escalier pliant selon la revendication 12, **caractérisé en ce que** les pieds d'appui (35') sont montés sur le montant latéral (3') de manière à pouvoir pivoter respectivement autour d'un axe horizontal.

14. Escalier pliant selon l'une des revendications précédentes, **caractérisé en ce que** ses parties sont réalisées en un métal léger, de préférence de l'aluminium, ou en acier, de préférence inoxydable ou zingué.
